# EUROPEAN PATENT APPLICATION

(11) **EP 4 685 989 A1**
(43) Date of publication of application: **28.01.2026**
(21) Application number: 24882756.0
(22) Date of filing: 21.10.2024
(51) Int. Cl.: H01M 50/54, H01M 50/534

(54) **BATTERY CELL AND METHOD FOR MANUFACTURING BATTERY CELL**

(30) Priority: 25.10.2023 KR 20230143890
(71) Applicant: LG Energy Solution, Ltd., Seoul 07335 (KR)
(72) Inventor: AHN, Jihoon, Daejeon 34122 (KR); HONG, Kyungsik, Daejeon 34122 (KR)
(74) Representative: Goddar, Heinz J.
(86) International application number: PCT/KR2024/015997
(87) International publication number: WO 2025/089729

(57) **Abstract**

Provided is a battery cell comprising: an electrode tab assembly in which a plurality of electrode tabs extending from a plurality of electrode plates to one side are stacked; a case in which the plurality of electrode plates are accommodated; and a lead tab electrically connected to the electrode tab assembly and having at least a portion exposed to the outside of the case. The electrode tab assembly includes: a first connection part formed by welding and coupling at least some of the plurality of electrode tabs to each other, and a second connection part extending from the first connection part and welded and coupled to the lead tab, wherein the number of electrode tabs constituting the second connection part is smaller than the number of electrode tabs constituting the first connection part.

## Description

### Technical Field

The present disclosure relates to a battery cell and a method for manufacturing the battery cell.

### Background Art

Since being rechargeable and dischargeable unlike a primary battery, a secondary battery may be applied to various fields such as a digital camera, a mobile phone, a laptop computer, a hybrid vehicle, and an electric vehicle. The secondary battery includes a nickel-cadmium battery, a nickel-metal hydride battery, a nickel-hydrogen battery, or the like, and a lithium-ion battery is widely used recently.

In a case of a conventional lithium-ion battery, with respect to a negative electrode and a positive electrode, copper, aluminum foil, or the like has been used as a current collector, and a negative electrode active material or a positive electrode active material has been laminated on both surfaces thereof, so that the negative electrode or the positive electrode has been manufactured.

In contrast, in a case of a lithium-sulfur (Li-S) battery or a lithium-metal (Li-metal) battery, a next generation battery, a negative electrode may be formed of a lithium metal itself. In this case, as a negative electrode tab is formed by extending the lithium metal forming a negative electrode plate, an electrode tab may become relatively thicker than an electrode tab of the conventional lithium-ion battery.

Such a thick electrode tab may decrease quality of connection to a lead tab and cause difficulty in an electrode assembly being received in a cell case. Particularly, an electrode tab formed of the lithium metal has been pressed and spread out by pressure in a process of being welded to a lead tab, so that sealing between sealing between the lead tab and a cell case has been destroyed or a short circuit with the cell case has been caused.

Accordingly, a battery cell structure for decreasing a thickness of the electrode tab or an electrode tab bundle formed by electrode tabs together is required.

### Detailed Description of the Invention

### Technical Goals

An aspect provides a battery cell having a structure for decreasing a thickness of an electrode tab bundle (e.g., an electrode tab assembly) continuing from an electrode assembly to a lead tab and a method for manufacturing the battery cell.

Another aspect also provides a battery cell having a structure for decreasing a thickness of an electrode tab bundle (e.g., an electrode tab assembly), so that quality of connection to a lead tab is improved and an electrode assembly may be easily inserted into a case, and a method for manufacturing the battery cell.

### Technical solutions

According to an aspect, there is provided a battery cell including an electrode tab assembly in which a plurality of electrode tabs individually extended from a plurality of electrode plates toward one side are stacked, a case in which the plurality of electrode plates are accommodated, and a lead tab electrically connected to the electrode tab assembly and of which at least a portion is exposed to an outside of the case, and the electrode tab assembly includes a first connection part formed by welding at least some of the plurality of electrode tabs to each other, and a second connection part extended from the first connection part and welded to the lead tab, and a number of electrode tabs forming the second connection part is smaller than a number of electrode tabs forming the first connection part.

The plurality of electrode tabs may include at least one first-type electrode tab forming the second connection part, and at least one second-type electrode tab shorter than the one or more first-type electrode tabs and forming the first connection part together with the one or more first-type electrode tabs.

The at least one second-type electrode tab may not overlap the lead tab in a stacking direction of the plurality of electrode tabs.

The at least one second-type electrode tab may include N electrode tabs different in type disposed at different positions in a width direction of the plurality of electrode plates, and the N may be a natural number greater than or equal to two.

The N electrode tabs different in type may be respectively welded to different portions of the at least one first-type electrode tab.

At least two of the N electrode tabs different in type may be disposed so as not to overlap each other in a stacking direction of the plurality of electrode tabs.

A width of each of the N electrode tabs different in type may be smaller than or equal to one N-th of a width of the at least one first-type electrode tab.

The first connection part may be disposed between the second connection part and the plurality of electrode plates.

The plurality of electrode tabs may be formed of lithium or an alloy including lithium.

According to another aspect, there is also provided a method for manufacturing a battery cell, the method including an alignment operation of forming an electrode tab assembly by aligning a plurality of electrode tabs extended from a plurality of electrode plates toward one side, a first welding operation of ultrasonically welding a first area of the electrode tab assembly, and a second welding operation of ultrasonically welding a lead tab to a second area of the electrode tab assembly, and a number of electrode tabs stacked in the second area is less than a number of electrode tabs stacked in the first area.

The first welding operation may be performed earlier than the second welding operation.

The electrode tab assembly may include at least one first-type electrode tab overlapping the lead tab in a stacking direction of the plurality of electrode tabs, and at least one second-type electrode tab having a length shorter than a length of the at least one first-type electrode tab and coupled to the at least one first-type electrode tab, the at least one first-type electrode tab and the at least one second-type electrode tab may be stacked together in the first area, and only the at least one first-type electrode tab may be stacked in the second area.

The at least one second-type electrode tab may include at least one second-first-type electrode tab and at least one second-second-type electrode tab disposed at different positions in a width-direction of the plurality of electrode plates, and a width of the at least one second-first-type electrode tab and a width of the at least one second-second-type electrode tab may be smaller than a width of the at least one first-type electrode tab.

The at least one second-first-type electrode tab and of the at least one second-second-type electrode tab may not overlap each other in the stacking direction of the plurality of electrode tabs.

The plurality of electrode tabs may be formed of lithium or an alloy including lithium.

### Effects of the Invention

According to example embodiments, it is possible to provide a battery cell of which a thickness of an electrode tab bundle (e.g., an electrode tab assembly) continuing an electrode assembly to a lead tab.

According to example embodiments, it is possible to provide a battery cell having a structure in which quality of connection to a lead tab is improved and in which an electrode assembly may be easily inserted into a case.

### Brief Description of Drawings

FIG. 1 is an exploded perspective diagram illustrating a battery cell according to example embodiments.
FIG. 2 is a reference diagram illustrating a shape in which a plurality of electrode plates are stacked according to example embodiments.
FIG. 3 is a partial enlarged diagram for describing a first-type electrode tab and a second-type electrode tab among some forms of an electrode tab according to example embodiments.
FIG. 4 is an example cross-sectional diagram according to section I-I' of FIG. 2.
FIG. 5 is a reference diagram illustrating a shape in which a plurality of electrode plates according to a comparative example.
FIG. 6 is a cross-sectional diagram according to section II-II' of FIG. 5.
FIG. 7 is a reference diagram illustrating a shape in which a plurality of electrode plates are stacked according to other example embodiments.
FIG. 8 is a partial enlarged diagram for describing electrode tabs different in type of a plurality of electrode plates.
FIG. 9 is an example cross-sectional diagram according to section III-III' of FIG. 7.
FIG. 10 is an example cross-sectional diagram according to section IV-IV' of FIG. 7.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

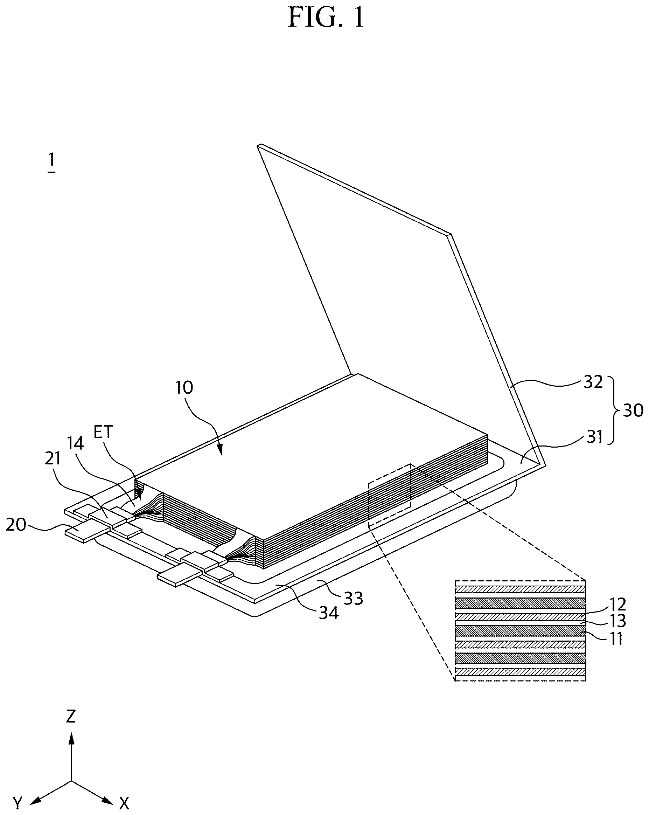

FIG. 1 is an exploded perspective diagram illustrating a battery cell 1 according to example embodiments.

The battery cell 1 may include an electrode assembly 10 in which a plurality of electrode plates 11 and 12 are stacked, a case 30 that receives the electrode assembly 10, and a lead tab 20 that is electrically connected to the electrode assembly 10 and of which a portion is exposed to an outside of the case 30.

The case 30 may include an electrode receiving part 33 that receives the electrode assembly 10 and a sealing part 34 disposed along an edge of the electrode receiving part 33. The electrode receiving part 33 may be formed by vertically combining an upper case 32 and a lower case 31 and may have an inside space that receives the electrode assembly 10. The sealing part 34 may be formed by pressing or thermally fussing edges of the upper case 32 and the lower case 31, so that an inflow of a foreign substance or moisture outside the case 30 to the electrode assembly 10 received in the electrode receiving part 33 may be blocked.

The case 30 may be a pouch-type case manufactured of a soft material. For example, the case 30 may be formed of an aluminum laminate sheet. However, the case 30 of the battery cell 1 according to example embodiments may be provided as a can-type (or rectangular) case or a cylindrical case formed of a metallic material such as aluminum in addition to the above-described pouch-type case.

The electrode assembly 10 may have a structure in which multiple first electrode plates 11 and multiple second electrode plates 12 that have polarities opposite to each other are stacked with a separator 13 in between.

The separator 13 may be interposed between a first electrode plate 11 and a second electrode plate 12 to prevent an electrical short circuit between the first electrode plate 11 and the second electrode plate 12 and may be impregnated with an electrolyte so that an ion may pass therethrough. The separator 13 may be formed of a porous polymer film or nonwoven fabric. However, a material generally used for a lithium secondary battery other than the above-describe material may be used as a material of the separator 13 without particular limitation.

Each of the multiple first electrode plates 11 and the multiple second electrode plates 12 may include an electrode tab 14. Electrode tabs 14 having an identical polarity may form together an electrode tab assembly ET. The lead tab 20 which serves as a terminal in the battery cell 1 may be coupled to the electrode tab assembly ET, and accordingly, the electrode assembly 10 and the lead tab 20 may be electrically connected to each other. Various welding schemes, such as ultrasonic welding, or a physical coupling scheme using a rivet or the like may be applied to coupling between the electrode tab assembly ET and the lead tab 20.

The lead tab 20 may be formed of a conductive metallic material. For example, the lead tab 20 may be manufactured of nickel (Ni), aluminum (Al), copper (Cu), iron (Fe), or an alloy including such metals.

An insulation member 21 may be disposed between the lead tab 20 and the case 30. For example, the insulation member 21 may be formed of a material having both of an insulating property and adhesiveness and may be bonded to the sealing part 34 of the case 30 while surrounding a portion of the lead tab 20 so that electrical insulation between the lead tab 20 and the case 30 is secured and so that quality of sealing between the lead tab 20 and sealing part 34 is not decreased.

In example embodiments, the first electrode plate 11 and the second electrode plate 12 of the electrode assembly 10 may be electrode plates having the polarities opposite to each other. For example, when the first electrode plate 11 is a negative electrode plate, the second electrode plate 12 may be a positive electrode plate (or vice versa).

The positive electrode plate may have a structure in which a positive electrode active material layer is formed on a metallic current collector. For example, the positive electrode plate may be formed by applying a mixture of a positive electrode active material, a conductive material, and a binder to a current collector having an aluminum alloy material. At this point, a publicly known material used for the lithium secondary battery may be applied as materials of the positive electrode active material, the binder, the conductive material, and the current collector without limitation.

The battery cell 1 according to example embodiments may be configured as a lithium metal battery or a lithium-sulfur battery, and in this case, the negative electrode plate may be formed of a lithium metal sheet in contrast to a conventional negative electrode plate.

In a case of a conventional lithium ion secondary battery, a negative electrode plate may have a structure in which a negative electrode active material layer is formed on a metallic current collector. For example, the negative electrode plate may be formed by applying a mixture of a negative electrode active material, a conductive material, and a binder to a current collector having an aluminum alloy material.

In contrast, the negative electrode plate of the battery cell 1 according to example embodiments may have an integrated structure formed of the lithium metal sheet. The lithium metal sheet is a planar member formed of lithium or a lithium alloy material, and the negative electrode plate and a negative electrode tab formed on a side of the negative electrode plate according to example embodiments may be implemented by appropriately processing a shape of the lithium metal sheet.

Since a conventional metallic current collector formed of nickel (Ni), aluminum (Al), copper (Cu), or the like may be omitted in the battery cell 1 to which the negative electrode plate formed of the lithium metal sheet is applied, the battery cell 1 may have greatly high energy density.

However, when the negative electrode plate is formed of the lithium metal sheet, a wide electrode plate body portion facing the separator 13 and an electrode tab extended therefrom may be integrally formed to have equal thickness, and accordingly, there is concern that a thickness of the electrode tab assembly ET in which electrode tabs are stacked may be greatly increased to a degree corresponding to a thickness of a stack of negative electrode plates. The electrode tab assembly ET which is increased in size may decrease welding easiness in a process of being welded to the lead tab 20 and may have difficulty in being received in the case 30 because appropriately bending the electrode tab assembly ET to correspond to a narrow space formed between the electrode assembly 10 and the sealing part 34 is difficult.

Particularly, when the lead tab 14 is formed of a lithium metal, an ultrasonic welding scheme may be applied to the coupling between the electrode tab assembly ET and the lead tab 20. Due to a material property of lithium, a lithium electrode tab ET increased in size may be pressed and spread out, and accordingly, there is concern of interference with other elements of the battery cell 1. For example, the lithium electrode tab assembly ET may be spread by pressure applied in a welding process, surround the lead tab 20, and interfere with the insulation member 21 attached to the case 30. Accordingly, there is concern that quality of sealing of the case 30 is decreased and that an electrical short circuit between the negative electrode plate and the case 30 is caused.

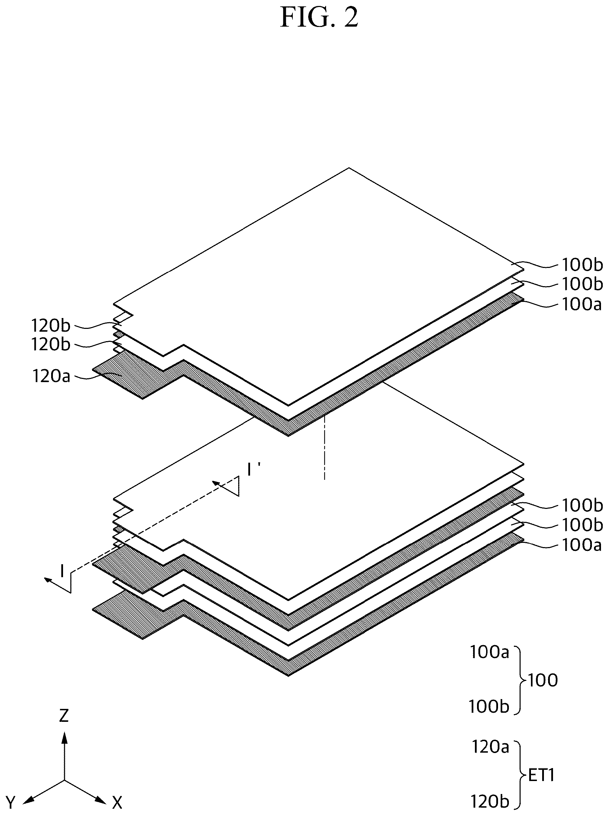

As a solution thereto, the electrode tab assembly ET according to example embodiments may be formed of a plurality of areas different in thickness. Hereinafter, such a structure of the electrode tab assembly ET will be described in further detail with reference to FIGS. 2 through 4.

FIG. 2 is a reference diagram illustrating a shape in which a plurality of electrode plates 100 are stacked according to example embodiments.

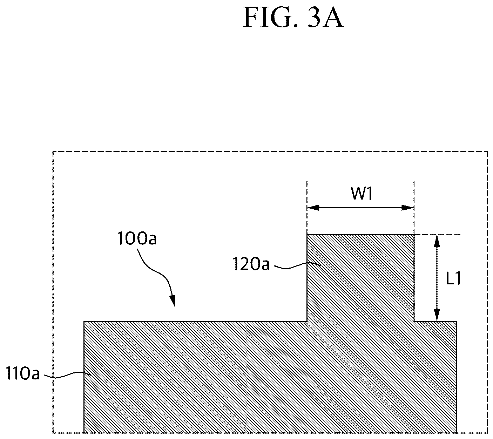

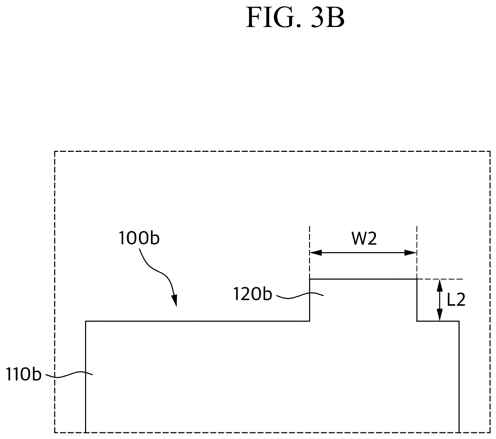

FIG. 3 is a partial enlarged diagram for describing a first-type electrode tab 120a and a second-type electrode tab 120b among some forms of an electrode tab according to example embodiments.

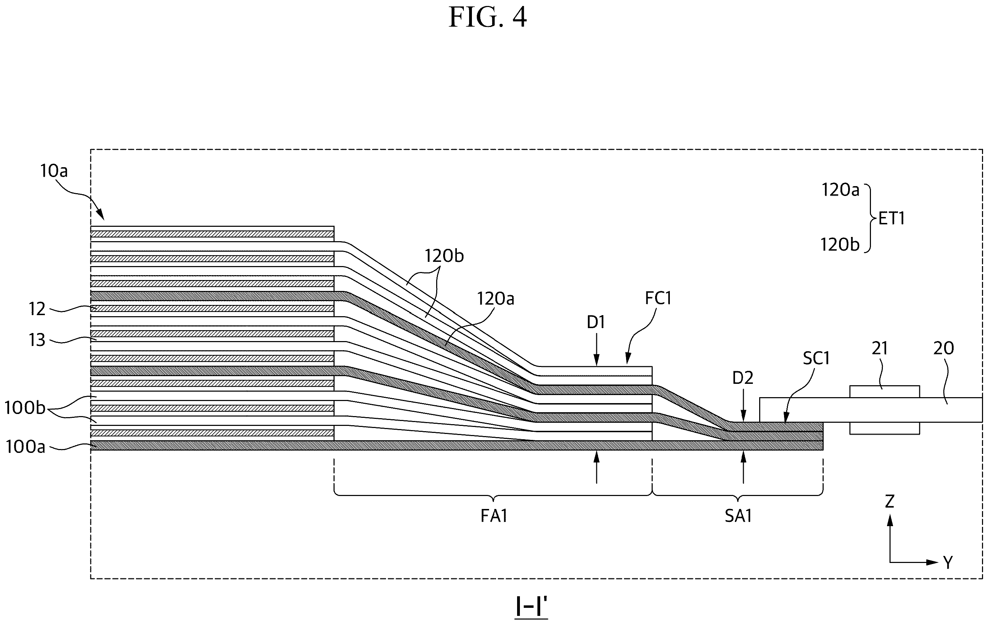

FIG. 4 is an example cross-sectional diagram according to section I-I' of FIG. 2.

The plurality of electrode plates 100 and the lead tab 20 described in FIGS. 2 through 4 may include all technical properties of a plurality of electrode plates 11 and the lead tab 20 described in FIG. 1. For example, a plurality of first electrode plates 100 illustrated in FIGS. 2 through 4 may be electrode plates having an identical polarity and may correspond to the negative electrode plate described above with reference to FIG. 1 (meanwhile, a description of the plurality of first electrode plates 100 illustrated in FIGS. 2 through 4 may be identically applied to the positive electrode plate described above with reference to FIG. 1).

The plurality of first electrode plates 100 having the identical polarity may be disposed to be stacked in one direction with another plurality of second electrode plates 12 having an opposite polarity and the separator 13 in between. For example, FIG. 2 illustrates the plurality of first electrode plates 100 stacked in the one direction as such (the second electrode plate 12 and the separator 13 are omitted in FIG. 2).

The first electrode plates 100 may include electrode plate body portions 110a and 110b and electrode tabs 120a and 120b protruding from the electrode plate body portion 110a and 110b toward the lead tab 20. For example, when the plurality of first electrode plates 100 are stacked in a first direction (e.g., a Z-axis direction), the electrode tabs 120a and 120b of the first electrode plates 100 may protrude from the electrode plate body portions 110a and 110b in a second direction (e.g., a Y-axis direction).

A plurality of electrode tabs 120a and 120b protruding from the plurality of first electrode plates 100 may be stacked on each other to form an electrode tab assembly ET1, and at least a portion of the electrode tab assembly ET1 may be welded to the lead tab 20.

In example embodiments, the plurality of first electrode plates 100 may include electrode plates different in type, which have the electrode tabs 120a and 120b different in size. For example, referring to FIGS. 2 and 3, the plurality of first electrode plates 100 may include one or more first-type electrode plates 100a and one or more second-type electrode plates 100b that respectively have the first-type electrode tab 120a and the second-type electrode tab 120b different in size.

Shade shown in a first-type electrode plate 100a in a drawing is merely for easily distinguishing the first-type electrode plate 100a and a second-type electrode plate 100b in the drawing and does not mean that materials or surficial shapes of the first-type electrode plate 100a and the second-type electrode plate 100b are different from each other. For example, regardless of the shade in the drawing, both of the first-type electrode plate 100a and the second-type electrode plate 100b may be formed of a lithium metal sheet.

In addition, in the drawing, one first-type electrode plate 100a and two second-type electrode plates 100b are alternately stacked, but a pattern of stacking the first-type electrode plate 100a and the second-type electrode plate 100b is not limited thereto, and the first-type electrode plate 100a and the second-type electrode plate 100b may be disposed to be stacked in various patterns as required.

A size of the second-type electrode tab 120b of the second-type electrode plate 100b may be smaller than that of the first-type electrode tab 120a of the first-type electrode plate 100a. For example, referring to FIG. 3, a length L2 of the second-type electrode tab 120b may be smaller than a length L1 of the first-type electrode tab 120a. At this point, a width W2 of the second-type electrode tab 120b may be less than or equal to a width W1 of the first-type electrode tab 120a as illustrated in FIG. 3 (however, the width W2 of the second-type electrode tab 120b is not necessarily limited to the width W1 of the first-type electrode tab 120a or less and may be larger than the width W1 of the first-type electrode tab 120a as required).

Due to a difference between the length L1 of the first-type electrode tab 120a and the length L2 of the second-type electrode tab 120b, in a state in which the plurality of first electrode plates 100 are stacked, the first-type electrode tab 120a may protrude longer than the second-type electrode tab 120b.

Also, due to such a difference in length, the electrode tab assembly ET1 may be divided into a plurality of areas in which numbers of the electrode tabs 120a and 120b which are stacked are different. For example, referring to FIG. 4, the electrode tab assembly ET1 may be divided into a first area FA1 in which the first-type electrode tab 120a and the second-type electrode tab 120b are stacked together and a second area SA1 in which only the first-type electrode tab 120a are stacked. Since only the first-type electrode tab 120a is stacked in the second area SA1 while both of the first-type electrode tab 120a and the second-type electrode tab 120b are stacked in the first area FA1, the number of the electrode tabs 120a and 120b which form the first area FA1 may be greater than the number of the electrode tabs 120a and 120b which form the second area SA1.

In the first area FA1, a plurality of first-type electrode tabs 120a and a plurality of second-type electrode tabs 120b may be coupled to each other to form a first connection part FC1. At this point, various welding schemes such as ultrasonic welding or laser welding or a mechanical coupling scheme using a rivet or the like may be applied to a scheme of coupling the first-type electrode tab 120a and the second-type electrode tab 120b. For example, in a state in which the first-type electrode tab 120a and the second-type electrode tab 120b are stacked and aligned, the first connection part FC1 may be formed through ultrasonic welding for pressing an upper surface and/or a lower surface thereof.

In the second area SA1, the plurality of first-type electrode tabs 120a may be coupled to each other to form a second connection part SC1. The lead tab 20 may be coupled to the second connection part SC1. Various welding schemes such as the ultrasonic welding or the laser welding or a mechanical coupling scheme using a rivet or the like may be applied to forming the second connection part SC1 and coupling between the second connection part SC1 and the lead tab 20.

At this point, in a state in which the plurality of first-type electrode tabs 120a are aligned, a welding process is performed after the lead tab 20 is seated in the second area SA1, and the second connection part SC1 may be formed while being coupled to the lead tab 20. Alternatively, after the plurality of first-type electrode tabs 120a may be welded earlier to each other to form the second connection part SC1, the lead tab 20 may be welded to the second connection part SC1.

The second connection part SC1 may be extended from the first connection part FC1 to be in contact with the lead tab 20. In other words, the first connection part FC1 may be disposed between the second connection part SC1 and the plurality of electrode plates 100.

Since the first connection part FC1 is formed by stacking both of the first-type electrode tab 120a and the second-type electrode tab 120b, a thickness thereof may be larger than a thickness of the second connection part SC1 in which only the first-type electrode tab 120a is stacked.

For example, referring to FIG. 4, the second-type electrode tab 120b which forms the first connection part FC1 together with the first-type electrode tab 120a may be configured so as not to overlap the lead tab 20 in a stacking direction (e.g., the Z-axis direction) of the electrode tabs 120a and 120b, and accordingly, the thickness of the second connection part SC1 may be smaller than a thickness of the first connection part FC1 by a thickness of a stack of second-type electrode tabs 120b.

According to such a structure, the first-type electrode tab 120a which forms the second connection part SC1 may be welded to the lead tab 20 to be directly and electrically connected to the lead tab 20. Meanwhile, the second-type electrode tab 120b which forms a portion of the first connection part FC1 may be electrically connected to the lead tab 20 through the first-type electrode tab 120a.

As such, according to the electrode tab assembly ET1 of example embodiments, since a thickness of the second area SA1 which is coupled to the lead tab 20 is formed thinly, a thickness of the electrode tab assembly ET1 may be partially decreased. Particularly, since the thickness of the second connection part SC1 coupled to the lead tab 20 may be greatly decreased, easiness of being welded to the lead tab 20 is increased, and since easy deformation to correspond to an inside shape of the case 30 (of FIG. 1) in a state of being connected to the lead tab 20 is allowed, a property of insertion of an electrode assembly 10a into a case is improved.

Particularly, when the first electrode plates 100 are formed of the lithium metal sheet, only a portion of lithium electrode tabs having thicknesses corresponding to thicknesses of the electrode plate body portions 110a and 110b (namely, the first-type electrode tab 120a) may be connected to the lead tab 20, and another portion (namely, the second-type electrode tab 120b) may be connected to an electrode tab connected to the lead tab 20 (namely, the first-type electrode tab 120a), so that easiness of connection to the lead tab 20 may be secured without decreasing electrical conductivity of the electrode tab assembly ET1. Also, since the thickness of the second connection part SC1 which is connected to the lead tab 20 is greatly smaller than a thickness of a stack of lithium metal plates, a lithium metal electrode tab may be prevented from being spread out in a welding process and interfering with other elements of a battery cell, such as the insulation member 21.

Hereinafter, a battery cell having the above-described electrode tab assembly ET1 will be described in terms of a manufacturing method therefor.

Initially, an alignment operation of aligning the plurality of electrode plates 100 which forms a portion of the electrode assembly 10a of the battery cell and forming the electrode tab assembly ET1 formed with the plurality of electrode tabs 120a and 120b extended from the plurality of electrode plates 100 is performed.

The electrode tab assembly ET1 may be welded to the lead tab 20 through a welding process. The welding process may include a first welding operation of welding the first area FA1 of the electrode tab assembly ET1 and a second welding operation of welding the lead tab 20 to the second area SA1 of the electrode tab assembly ET1. Various welding schemes may be applied to the first welding operation and the second welding operation. For example, an ultrasonic welding scheme may be applied.

The first welding operation may be performed prior to the second welding operation. That is, the first connection part FC1 may be formed by performing earlier the first welding operation, and electrical connection between the plurality of electrode tabs 120a and 120b may be completed, and then the second connection part SC1 may be formed by performing the second welding operation in a portion, corresponding to the second area SA1, of the first-type electrode tab 120a, and electrical connection between the electrode tab assembly ET1 and the lead tab 20 may be completed.

Through the first welding operation, since the plurality of electrode tabs 120a are aligned closer to each other, the easiness of being welded to the lead tab 20 may be further increased. Thus, the first welding process may serve as a type of pre-welding for easily welding the lead tab 20 and the electrode tab assembly ET1.

Through the welding process, the lead tab 20 and the electrode assembly 10a may be coupled to each other to be electrically connected. The electrode assembly 10a and the lead tab 20 which are connected may be received in the case 30 (of FIG. 1) in a casing operation. In the casing operation, the electrode assembly 10a is received to the electrode receiving part 33 (of FIG. 1) of the case 30, and the sealing part 34 (of FIG. 1) is formed by pressing or thermally fusing the case 30 along an edge of the electrode receiving part 33. At this point, the insulation member 21 is disposed between the lead tab 20 and the case 30 to electrically insulate the lead tab 20 and the case 30 from each other and secure quality of sealing at the lead tab 20.

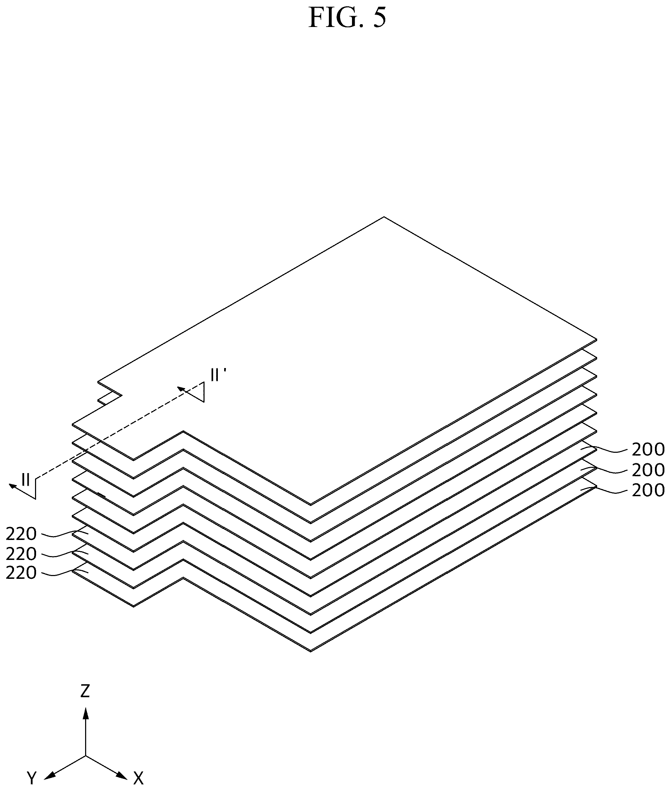

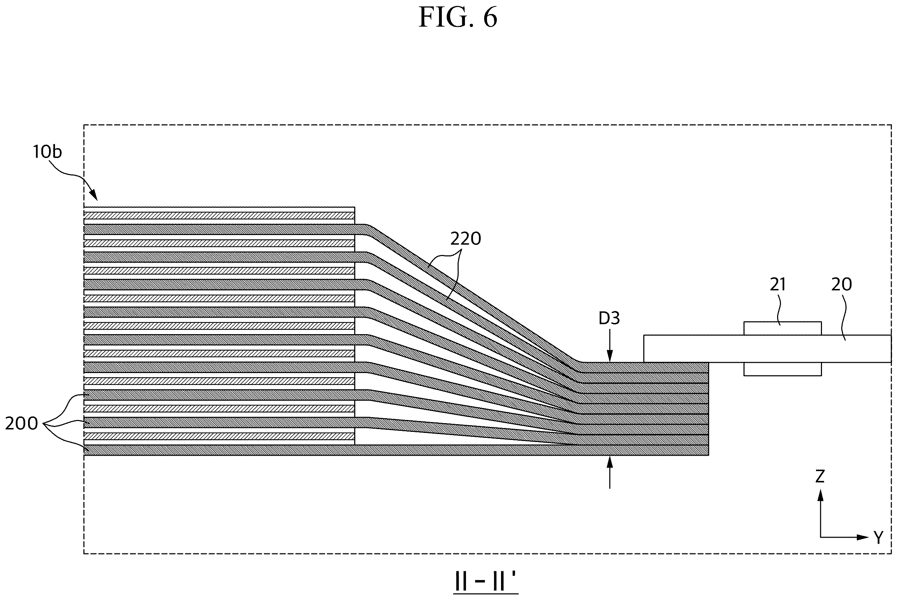

Hereinafter, with reference to a comparative example illustrated in FIGS. 5 and 6, a difference between electrode tab assemblies according to example embodiments and a comparative example will be described.

FIG. 5 is a reference diagram illustrating a shape in which a plurality of electrode plates 200 are stacked according to a comparative example.

FIG. 6 is a cross-sectional diagram according to section II-II' of FIG. 5.

The plurality of electrode plates 200 according to the comparative example described in FIGS. 5 and 6 may have identical properties, excluding a shape of an electrode tab 220, when compared to the first electrode plate 100 described above with reference to FIGS. 2 through 4. For example, as illustrated in FIG. 5, the plurality of electrode plates 200 may have electrode tabs 220 identical in size and all accordingly overlap the lead tab 20 in a stacking direction of the plurality of electrode plates 200 (e.g., a Z-axis direction).

Accordingly, a thickness of a portion at which the plurality of electrode plates 200 are connected to the lead tab 20 is equal to a sum of respective thicknesses of the electrode tabs 220.

Referring to FIGS. 4 and 6 together, in example embodiments and the comparative example, when electrode tabs individually extended from nine electrode plates and having an equal thickness of t are stacked to form an electrode tab assembly, while a thickness of a portion at which the lead tab 20 is connected to the electrode tab assembly of the comparative example is 9t, a thickness of a portion at which the lead tab 20 is connected to the electrode tab assembly ET1 of example embodiments (namely, the second connection part SC1) is 3t, and it may be identified that the thickness is decreased by one third.

In other words, according to a structure of the electrode tab assembly ET1 according to example embodiments, the thickness of the portion at which the lead tab 20 is connected may be greatly decreased when compared to a structure of an electrode tab assembly formed with the electrode tabs 220 which overlap the lead tab 20 in a stacking direction as shown in the comparative example.

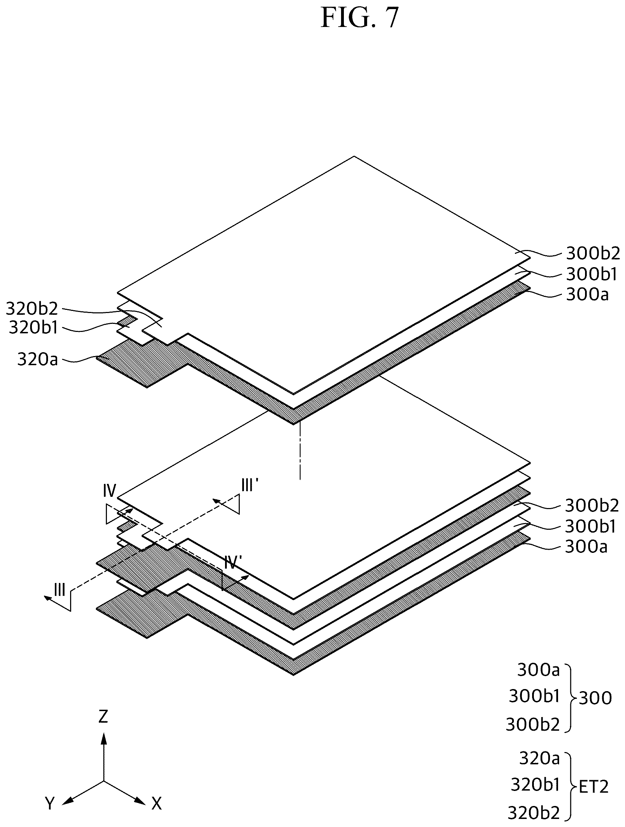

Meanwhile, in other example embodiments, second-type electrode plates may be classified into N electrode tabs different in type that are formed at different positions. Hereinafter, the structure of the electrode tab assembly will be described according to other example embodiments with reference to FIGS. 7 through 10.

FIG. 7 is a reference diagram illustrating a shape in which a plurality of electrode plates 300 are stacked according to other example embodiments.

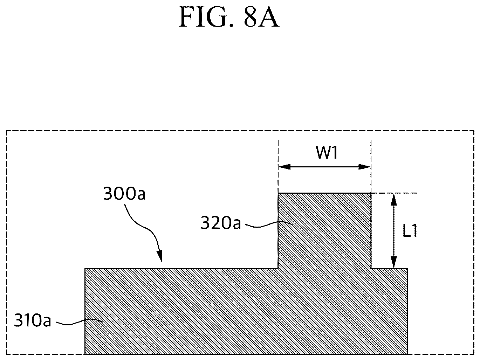

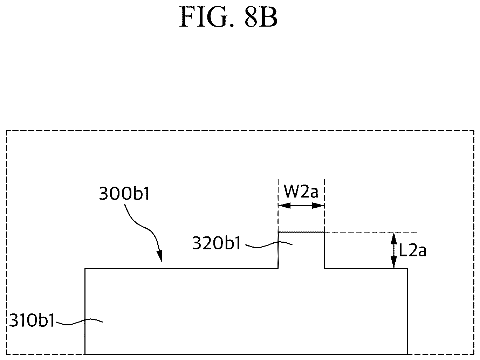

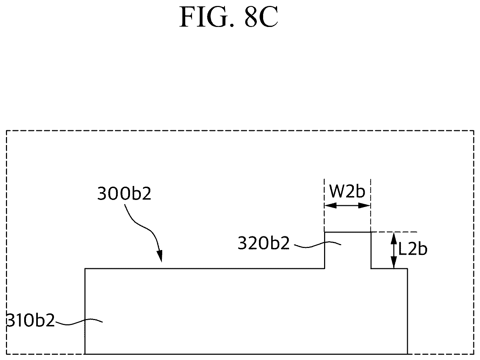

FIG. 8 is a partial enlarged diagram for describing electrode tabs 320a, 320b1, and 320b2 different in type of the plurality of electrode plates 300.

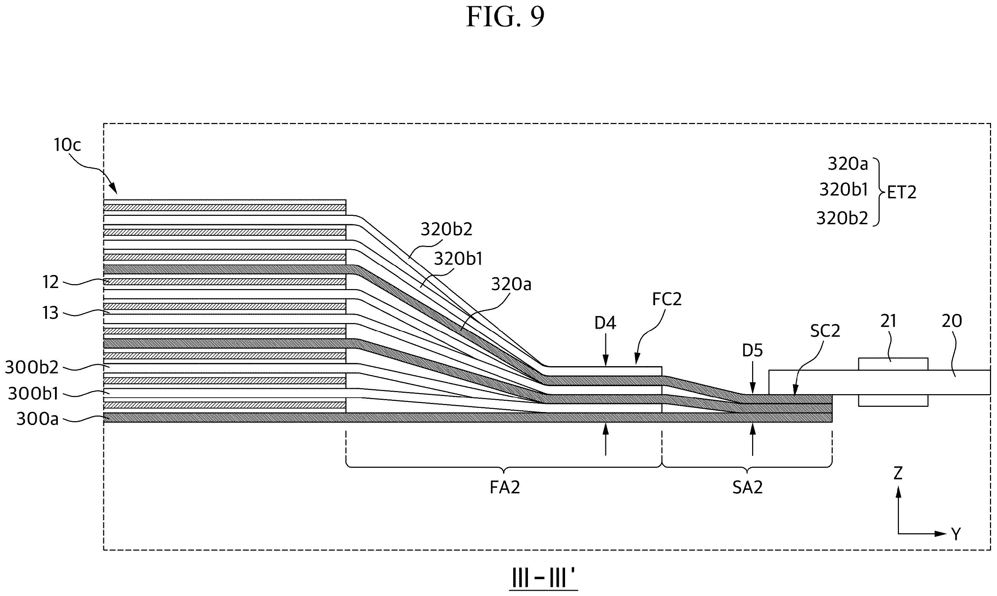

FIG. 9 is an example cross-sectional diagram according to section III-III' of FIG. 7.

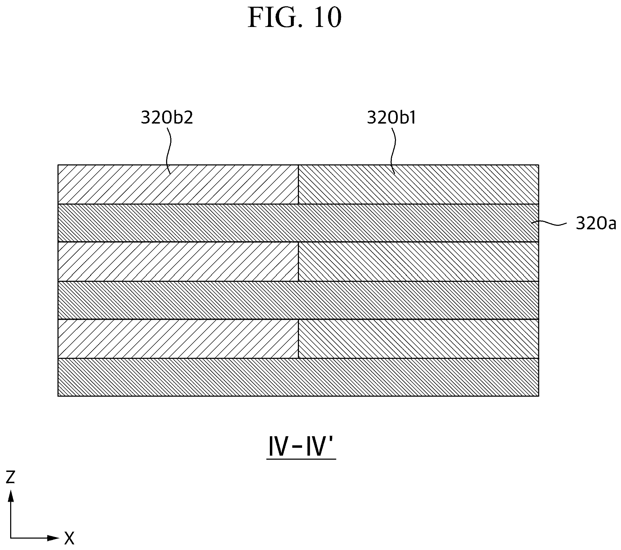

FIG. 10 is an example cross-sectional diagram according to section IV-IV' of FIG. 7.

Since the plurality of first electrode plates 300 described in FIGS. 7 through 10 include all other technical properties of the first electrode plates 100 described above through FIGS. 2 through 4, excluding those associated with the electrode tabs 120a and 120b, redundant descriptions similar to those of FIGS. 2 through 4 may be omitted.

In example embodiments, the plurality of first electrode plates 300 may include a first-type electrode plate 300a and second-type electrode plates 300b1 and 300b2 that have the electrode tabs 320a, 320b1, and 320b2 formed to be different in size. For example, referring to FIGS. 7 and 8, lengths L2a and L2b and widths W2a and W2b of second-type electrode tabs 320b1 and 320b2 of the second-type electrode plates 300b1 and 300b2 may be smaller than a length L1 and a width W1 of a first-type electrode tab 320a of the first-type electrode plate 300a.

In summary, second-type electrode plates may be formed as N electrode plates different in type individually having N electrode tabs different in type formed at different positions (at this point, N is a natural number greater than or equal to two). For example, a plurality of second-type electrode plates may have N electrode tabs different in type protruding from different positions in a width direction (e.g., an X-axis direction) of a first electrode plate 300.

FIGS. 7 through 10 illustrates example embodiments in which N is two. Referring to FIG. 8, the second-type electrode plates 300b1 and 300b2 may include a second-first-type electrode plate 300b1 and a second-second-type electrode plate 300b2 respectively having a second-first-type electrode tab 320b1 and a second-second-type electrode tab 320b2 protruding from different positions at edges of electrode plate body portions 310b1 and 310b2.

In a state in which the second-type electrode plates 300b1 and 300b2 are stacked, the second-first-type electrode tab 320b1 and the second-second-type electrode tab 320b2 may be disposed at different positions in a width direction (e.g., the X-axis direction) of the electrode plate body portions 310b1 and 310b2. For example, referring to FIG. 7, in a state in which a plurality of second-type electrode plates 300b1 and 300b2 are stacked, the second-first-type electrode tab 320b1 and the second-second-type electrode tab 320b2 may be disposed at different positions in a width direction (e.g., the X-axis direction) of the second-type electrode plates 300b1 and 300b2 and formed so that at least portions thereof do not overlap in a stacking direction (e.g., a Z-axis direction) of the second-type electrode plates 300b1 and 300b2.

In this case, N electrode tabs 320b1 and 320b2 different in type may be welded to different portions of the first-type electrode tab 320a. In other words, the N electrode tabs 320b1 and 320b2 different in type may be disposed at the different positions in the width direction of the electrode plate body portions 310b1 and 310b2 and stacked to face the different portions of the first-type electrode tab 320a and may be welded to the different portions of the first-type electrode tab 320a through a welding process of forming a first connection part FC2.

At least two of the N electrode tabs 320b1 and 320b2 different in type may be disposed so as not to overlap each other in a stacking direction (e.g., the Z-axis direction) of an electrode tab assembly ET2. For example, referring to FIGS. 7 and 10, the second-first-type electrode tab 320b1 and the second-second-type electrode tab 320b2 may be disposed so as not to overlap each other in the stacking direction (e.g., the Z-axis direction) of the electrode tab assembly ET2 (or in a stacking direction of the second-type electrode plates 300b1 and 300b2). Accordingly, as shown in FIG. 10, the second-first-type electrode tab 320b1 and the second-second-type electrode tab 320b2 may be disposed on an identical layer as electrode tabs are stacked.

In this case, respective widths W2a and W2b of the N electrode tabs 320b1 and 320b2 different in type may be formed to be greater than or equal to one N-th of a width W1 of at least one first-type electrode tab 320a. For example, referring to FIGS. 8 and 10, a width W2a of the second-first-type electrode tab 320b1 and a width W2b of the second-second-type electrode tab 320b2 may be formed to be less than or equal to a half of the width W1 of the first-type electrode tab 320a. Accordingly, in a state in which the first-type electrode tab 320a and the second-type electrode tabs 320b1 and 320b2 are stacked, both end portions of the second type electrode tabs 320b1 and 320b2 in the width direction (e.g., the X-axis direction) may not protrude further than the first-type electrode tab 320a. According to such a structure, in a state in which the electrode tabs are stacked, the second-type electrode tabs 320b1 and 320b2 relatively small in size may be positioned in an area of the first-type electrode tab 320a relatively large in size, so that electrode tabs small in size (namely, the second-type electrode tabs 320b1 and 320b2) may be prevented from being damaged or interfering with an electrode tab having an opposite polarity and another component in the case 30 (of FIG. 1) in a process of inserting the electrode tab assembly ET2 into the case 30.

Also, as the N electrode tabs 320b1 and 320b2 different in type are formed so as not to overlap each other in the stacking direction of the electrode tab assembly ET2, a thickness of the first connection part FC2 of the electrode tab assembly ET2 may be further decreased.

Particularly, according to a structure of the above-described N electrode tabs 320b1 and 320b2 different in type, the thickness of the first connection part FC2 of the electrode tab assembly ET2 according to example embodiments may be decreased further greatly than that of the first connection part FC1 of the electrode tab assembly ET1 according to example embodiments illustrated in FIGS. 2 through 4.

Referring to FIG. 9, in a first area FA2 of the electrode tab assembly ET2, a plurality of first-type electrode tabs 320a and a plurality of second-type electrode tabs 320b1 and 320b2 may be coupled to each other to form the first connection part FC2. At this point, various welding schemes such as ultrasonic welding or laser welding or a mechanical coupling scheme using a rivet or the like may be applied to a scheme of coupling the first-type electrode tab 320a and the second-type electrode tabs 320b1 and 320b2.

In a second area SA2 of the electrode tab assembly ET2, the plurality of first-type electrode tabs 320a may be coupled to each other to form a second connection part SC2. The lead tab 20 may be coupled to the second connection part SC2. Various welding schemes such as the ultrasonic welding or the laser welding or a mechanical coupling scheme using a rivet or the like may be applied to forming the second connection part SC2 and coupling between the second connection part SC2 and the lead tab 20.

The second-type electrode tab 320b1 and 320b2 may be disposed so as not to overlap the lead tab 20 in the stacking direction (e.g., the Z-axis direction) of the electrode tab assembly ET2, and accordingly, the number of electrode tabs forming the second area SA2 and the second connection part SC2 may be less than the number of electrode tabs forming the first area FA2 and the first connection part FC2. Since this is identical to the property of the second-type electrode tab 120b described above with reference to FIGS. 2 through 4, FIGS. 2 through 4 may be reference for a description thereof.

Referring to FIG. 9, since being disposed so as not to overlap each other in the stacking direction (e.g., the Z-axis direction) of the electrode tab assembly ET2, the second-first-type electrode tab 320b1 and the second-second-type electrode tab 320b2 included in the second-type electrode tab 320b1 and 320b2 may be disposed in an identical layer in the first connection part FC2. For example, as shown in FIG. 9, when the first-type electrode plate 300a, the second-first-type electrode plate 300b1, and the second-second-type electrode plate 300b2 are repeatedly stacked in sequential order, the second-first-type electrode tab 320b1 and the second-second-type electrode tab 320b2 may be disposed side by side along an upper surface of the first-type electrode tab 320a to form an identical layer.

Accordingly, when electrode tabs individually extended from nine first electrode plates 100 and 300 and having an equal thickness of t are stacked to form electrode tab assemblies ET1 and ET2, while a thickness of the first connection part FC1 according to example embodiments illustrated in FIG. 4 is 9t, the thickness of the first connection part FC2 illustrated in FIG. 9 may be 6t. That is, as N electrode tabs different in type disposed between two adjacent first-type electrode tabs 320a are disposed in an identical layer, the thickness of the first connection part FC2 at which the first-type electrode tab 320a and the second-type electrode tabs 320b1 and 320b2 are coupled may be greatly decreased.

Accordingly, in a process of ultrasonically welding the first connection part FC2, electrode tabs forming the first connection part FC2 may be further definitely prevented from being spread out to interfere with other components such as an insulation member of the lead tab 20. Also, as the thickness of the first connection part FC2 which connects the lead tab 20 and the plurality of electrode plates 300 at the electrode tab assembly ET2 is greatly decreased, easiness of welding the first connection part FC2 is greatly increased, and since the electrode tab assembly ET2 may be easily deformed to correspond to an inside shape of the case 30 in a state of being connected to the lead tab 20, a property of insertion into the case 30 is improved.

As illustrated in FIG. 9, a thickness of the second connection part SC2 formed by stacking the first-type electrode tabs 320 and a thickness of the second connection part SC2 illustrated in FIG. 4 may have an equal thickness of 3t. That is, the electrode tab assembly ET2 according to example embodiments of FIGS. 7 through 10 may have a structure in which thicknesses of the first connection part FC2 and the second connection part SC2 are gradually decreased.

Meanwhile, in terms of a method for manufacturing a battery cell, the stacking operation, the first welding operation, and the second welding operation described above through FIGS. 2 through 4 may be identically applied to forming the electrode tab assembly ET2 illustrated in FIG. 9. Thus, descriptions with reference to FIGS. 2 through 4 may be referenced for a detailed description therefor.

FIGS. 7 through 10 illustrates example embodiments in which the second-type electrode tabs 320b1 and 320b2 are divided into two electrode tabs different in type, namely, example embodiment in which the N is two. However, it is merely an example, and the N may be greater than or equal to three in other example embodiments. For example, second-type electrode tabs may include three electrode tabs different in type, namely, a second-first-type electrode tab, a second-first-type electrode tab, and a second-third-type electrode tab.

In this case, as described through FIGS. 7 through 10, the second-first-type electrode tab, the second-first-type electrode tab, and the second-third-type electrode tab may be disposed so as not to overlap each other in a stacking direction of an electrode tab assembly. As the N is increased, since the number of second-type electrode tabs disposed in an identical layer along the upper surface of the first-type electrode tab 320a is increased, a thickness of the electrode tab assembly may be formed sufficiently thinly even if multiple electrode plates are stacked.

According to the battery cell 1 of example embodiments, since thicknesses of the electrode tab assemblies ET1 and ET2 which are extended toward one side of a plurality of electrode plates 100 and 300 may be decreased, easiness of welding the lead tab 20 and the electrode tab assemblies ET1 and ET2 may be increased. In addition, as the thicknesses of the electrode tab assemblies ET1 and ET2 are decreased, an electrode assembly may be further easily inserted into the case 30.

Particularly, when the plurality of electrode plates 100 and 300 and the electrode tab assemblies ET1 and ET2 extended from the plurality of electrode plates 100 and 300 are formed of lithium metal, through structures of first-type electrode tab 120a and 320a and second-type electrode tab 120b, 320b1, and 320b2 having different lengths, by greatly decreasing thicknesses of portions at which the electrode tab assemblies ET1 and ET2 are coupled to the lead tab 20, while easiness of being ultrasonically welded to the lead tab 20 is secured, a lithium metal electrode tab may be prevented from being spread out to interfere with other components and decreasing quality of sealing of the case 30 in an ultrasonic welding process.

Also, according to the battery cell 1 of example embodiments, a plurality of second-type electrode tabs may be formed as N electrode tabs 320b1 and 320b2 different in type formed at different positions in a width direction of an electrode plate, so that the thickness of the electrode tab assembly ET2 may be decreased overall. Accordingly, a property of insertion of an electrode assembly 10b into the case 30 is further improved, and a short circuit with an adjacent electrode tab having an opposite polarity, interference with other components, or the like may be further definitely prevented.

The various example embodiments of the present disclosure have been described above in detail, but the scope of the present disclosure is not limited thereto. It will be apparent to those skilled in the art that various changes and modifications may be allowed within the range of the technical spirit of the present disclosure. In addition, the above-described example embodiments may be implemented without a portion of elements thereof, and each of the example embodiments may be implemented in combination with another.

## Claims

1. A battery cell comprising:
an electrode tab assembly in which a plurality of electrode tabs individually extended from a plurality of electrode plates toward one side are stacked;
a case in which the plurality of electrode plates are accommodated; and
a lead tab electrically connected to the electrode tab assembly and of which at least a portion is exposed to an outside of the case,
wherein the electrode tab assembly comprises:
a first connection part formed by welding at least some of the plurality of electrode tabs to each other; and
a second connection part extended from the first connection part and welded to the lead tab, and
a number of electrode tabs forming the second connection part is smaller than a number of electrode tabs forming the first connection part.

2. The battery cell of claim 1, wherein the plurality of electrode tabs comprise:
at least one first-type electrode tab forming the second connection part; and
at least one second-type electrode tab shorter than the one or more first-type electrode tabs and forming the first connection part together with the one or more first-type electrode tabs.

3. The battery cell of claim 2, wherein the at least one second-type electrode tab does not overlap the lead tab in a stacking direction of the plurality of electrode tabs.

4. The battery cell of claim 2, wherein the at least one second-type electrode tab comprises N electrode tabs different in type disposed at different positions in a width direction of the plurality of electrode plates, and the N is a natural number greater than or equal to two.

5. The battery cell of claim 4, wherein the N electrode tabs different in type are respectively welded to different portions of the at least one first-type electrode tab.

6. The battery cell of claim 4, wherein at least two of the N electrode tabs different in type are disposed so as not to overlap each other in a stacking direction of the plurality of electrode tabs.

7. The battery cell of claim 5, wherein a width of each of the N electrode tabs different in type is smaller than or equal to one N-th of a width of the at least one first-type electrode tab.

8. The battery cell of claim 1, wherein the first connection part is disposed between the second connection part and the plurality of electrode plates.

9. The battery cell of claim 1, wherein the plurality of electrode tabs are formed of lithium or an alloy comprising lithium.

10. A method for manufacturing a battery cell, the method comprising:
an alignment operation of forming an electrode tab assembly by aligning a plurality of electrode tabs extended from a plurality of electrode plates toward one side;
a first welding operation of ultrasonically welding a first area of the electrode tab assembly; and
a second welding operation of ultrasonically welding a lead tab to a second area of the electrode tab assembly,
wherein a number of electrode tabs stacked in the second area is less than a number of electrode tabs stacked in the first area.

11. The method of claim 10, wherein the first welding operation is performed earlier than the second welding operation.

12. The method of claim 10, wherein the electrode tab assembly comprises:
at least one first-type electrode tab overlapping the lead tab in a stacking direction of the plurality of electrode tabs; and
at least one second-type electrode tab having a length shorter than a length of the at least one first-type electrode tab and coupled to the at least one first-type electrode tab,
the at least one first-type electrode tab and the at least one second-type electrode tab are stacked together in the first area, and
only the at least one first-type electrode tab is stacked in the second area.

13. The method of claim 12, wherein the at least one second-type electrode
tab comprises at least one second-first-type electrode tab and at least one second-second-type electrode tab disposed at different positions in a width-direction of the plurality of electrode plates, and
a width of the at least one second-first-type electrode tab and a width of the at least one second-second-type electrode tab are smaller than a width of the at least one first-type electrode tab.

14. The method of claim 13, wherein the at least one second-first-type electrode tab and of the at least one second-second-type electrode tab do not overlap each other in the stacking direction of the plurality of electrode tabs.

15. The method of claim 10, wherein the plurality of electrode tabs are formed of lithium or an alloy comprising lithium.
